# EUROPEAN PATENT APPLICATION

(11) **EP 4 491 072 A1**
(43) Date of publication of application: **15.01.2025**
(21) Application number: 23825359.5
(22) Date of filing: 11.08.2023
(51) Int. Cl.: A47J 37/06

(54) **COOKING DEVICE AND CONTROL METHOD AND APPARATUS THEREFOR, AND COMPUTER READABLE STORAGE MEDIUM**

(30) Priority: 31.05.2023 CN 202310644842
(71) Applicant: Guangdong Midea Kitchen Appliances Manufacturing Co., Ltd., Foshan, Guangdong 528311 (CN)
(72) Inventor: ZHANG, Peiyao, Foshan, Guangdong 528311 (CN); LIU, Tianyi, Foshan, Guangdong 528311 (CN); LU, Xu, Foshan, Guangdong 528311 (CN); SHEN, Guoyang, Foshan, Guangdong 528311 (CN); ZHANG, Xiaohua, Foshan, Guangdong 528311 (CN); YUAN, Shuangxia, Foshan, Guangdong 528311 (CN); CHEN, Xiaojiang, Foshan, Guangdong 528311 (CN)
(74) Representative: RGTH
(86) International application number: PCT/CN2023/112475
(87) International publication number: WO 2024/244167

(57) **Abstract**

Provided are a cooking device, a control method and apparatus thereof, and a computer-readable storage medium. The cooking device includes a microwave module, a hot air module, a heating tube module, and a fan module. The method includes: obtaining a characteristic parameter of a food material and a cooking stage of the cooking device; determining a cooking parameter of the cooking device according to the characteristic parameter of the food material; and controlling at least one of the microwave module, the hot air module, the heating tube module, and the fan module according to the cooking parameter and the cooking stage.

## Description

### CROSS-REFERENCE TO RELATED APPLICATIONS

This application claims the priority to Chinese Patent Application No. 202310644842.X, entitled "COOKING DEVICE, CONTROL METHOD AND APPARATUS THEREOF, AND COMPUTER-READABLE STORAGE MEDIUM" and filed on May 31, 2023, the entire contents of which are incorporated herein by reference.

### FIELD

The present disclosure relates to the field of cooking control technologies, and particularly, to a cooking device, a control method and apparatus thereof, and a computer-readable storage medium.

### BACKGROUND

Frying food is a traditional and rapid food processing method, and is widely applied in household cooking and commercial cooking. Renowned for its enticing appearance and crispy taste on the outside and soft taste on the inside, fried food enjoys substantial popularity. Nonetheless, the fried food has a high fat content and easily generates harmful substances during cooking.

Air frying, a novel cooking method, substitutes hot air for oil as a heat transfer medium. This method drastically reduces or eliminates the need for oil during frying, which not only decreases an oil content of food, but also preserves its nutritional ingredients. However, since a heat transfer coefficient of air is smaller than that of oil, alterations in temperature, moisture, and color of the food during air frying are notably slower than those in frying, leading to long cooking time. Consequently, an increase in generation of harmful substances such as acrylamide may be caused in this period, creating harm to body health of people.

### SUMMARY

The present disclosure aims to solve at least one of the technical problems in the related art to some extent. To this end, a first objective of the present disclosure is to provide a control method for a cooking device. In this way, cooking time for a food material can be shortened. Meanwhile, generation of harmful substances such as acrylamide is reduced.

A second objective of the present disclosure is to provide a computer-readable storage medium.

A third objective of the present disclosure is to provide a cooking device.

A fourth objective of the present disclosure is to provide a control apparatus for a cooking device.

To achieve the above objectives, embodiments of a first aspect of the present disclosure provide a control method for a cooking device. The cooking device comprises a microwave module, a hot air module, a heating tube module, and a fan module. The method comprises: obtaining a characteristic parameter of a food material and a cooking stage of the cooking device; determining a cooking parameter of the cooking device according to the characteristic parameter of the food material; and controlling at least one of the microwave module, the hot air module, the heating tube module, and the fan module according to the cooking parameter and the cooking stage.

According to the control method for the cooking device provided by the embodiments of the present disclosure, the at least one of the microwave module, the hot air module, the heating tube module, and the fan module may be controlled according to the cooking parameter and the cooking stage. Therefore, the cooking time for the food material can be shortened. Meanwhile, the generation of harmful substances such as acrylamide is reduced.

In addition, the control method for the cooking device according to the above embodiments of the present disclosure may further have the following additional technical features.

According to an embodiment of the present disclosure, the characteristic parameter of the food material comprises a type and a weight of the food material, the cooking parameter comprises a predetermined cooking temperature, cooking power, and total cooking time, and the cooking stage comprises a preheating stage, a steady heating stage, a continuous heating stage, and a crusting and coloring stage.

According to an embodiment of the present disclosure, said controlling at least one of the microwave module, the hot air module, the heating tube module, and the fan module according to the cooking parameter and the cooking stage comprises: determining that a cooking temperature at the preheating stage is the predetermined cooking temperature in response to the cooking stage being the preheating stage; and controlling the heating tube module and the hot air module to preheat the cooking device, such that a cavity temperature of the cooking device reaches the predetermined cooking temperature.

According to an embodiment of the present disclosure, said controlling at least one of the microwave module, the hot air module, the heating tube module, and the fan module according to the cooking parameter and the cooking stage comprises: determining a first cooking temperature and first cooking time at the steady heating stage in response to the cooking stage being the steady heating stage, the first cooking temperature being smaller than the predetermined cooking temperature; and controlling, based on the first cooking time, the microwave module and the hot air module to operate alternately at a predetermined period, to maintain a surface temperature of the food material at the first cooking temperature.

According to an embodiment of the present disclosure, the method further comprises: controlling the fan module to operate along with the microwave module while controlling, based on the first cooking time, the microwave module and the hot air module to operate alternately at the predetermined period.

According to an embodiment of the present disclosure, cooking power of the microwave module is in a range of [800W, 1000W], cooking power of the hot air module is in a range of [1200W, 2200W], and the first cooking time is in a range of [40%t, 60%t], where t is the total cooking time.

According to an embodiment of the present disclosure, said controlling at least one of the microwave module, the hot air module, the heating tube module, and the fan module according to the cooking parameter and the cooking stage comprises: determining a second cooking temperature and second cooking time at the continuous heating stage in response to the cooking stage being the continuous heating stage, the second cooking temperature being greater than or equal to a sum of the predetermined cooking temperature and a first temperature threshold and smaller than or equal to a sum of the predetermined cooking temperature and a second temperature threshold; and controlling the heating tube module to continuously operate for the second cooking time, such that a cavity temperature of the cooking device reaches the second cooking temperature. Cooking power of the heating tube module is in a range of [1200W, 2600W], and the second cooking time is in a range of [10%t, 20%t], where t is the total cooking time.

According to an embodiment of the present disclosure, said controlling at least one of the microwave module, the hot air module, the heating tube module, and the fan module according to the cooking parameter and the cooking stage comprises: determining a third cooking temperature and third cooking time at the crusting and coloring stage in response to the cooking stage being the crusting and coloring stage, the third cooking temperature being greater than or equal to a sum of the predetermined cooking temperature and a third temperature threshold and smaller than or equal to a sum of the predetermined cooking temperature and a fourth temperature threshold; and controlling the heating tube module and the fan module to continuously operate for the third cooking time to maintain a cavity temperature of the cooking device at the third cooking temperature. The third cooking time is in a range of [20%t, 50%t], where t is the total cooking time.

According to an embodiment of the present disclosure, the predetermined cooking temperature and the cooking power are each determined based on the type of the food material, and the predetermined cooking temperature is in a range of [150°C, 250°C]; and the total cooking time is determined based on the weight of the food material, and the total cooking time is in a range of [12min, 35min].

To achieve the above objectives, embodiments of a second aspect of the present disclosure provide a computer-readable storage medium, which has a control program for a cooking device stored thereon. The control program for the cooking device, when executed by a processor, implements the control method for the cooking device described above.

With the computer-readable storage medium according to the embodiments of the present disclosure, the processor executes the control program for the cooking device stored thereon. Therefore, the cooking time for the food material can be shortened. Meanwhile, the generation of harmful substances such as acrylamide is reduced.

To achieve the above objectives, embodiments of a third aspect of the present disclosure provide a cooking device. The cooking device comprises a memory, a processor, and a control program for the cooking device stored on the memory and executable on the processor. The processor, when executing the control program, implements the control method for the cooking device described above.

With the cooking device according to the embodiments of the present disclosure, the processor executes the control program for the cooking device stored on the memory. Therefore, the cooking time for the food material can be shortened. Meanwhile, the generation of harmful substances such as acrylamide is reduced.

To achieve the above objectives, embodiments of a fourth aspect of the present disclosure provide a control apparatus for a cooking device. The cooking device comprises a microwave module, a hot air module, a heating tube module, and a fan module. The apparatus comprises: an obtaining module configured to obtain a characteristic parameter of a food material and a cooking stage of the cooking device; a determining module configured to determine a cooking parameter of the cooking device according to the characteristic parameter of the food material; and a control module configured to control at least one of the microwave module, the hot air module, the heating tube module, and the fan module according to the cooking parameter and the cooking stage.

According to the control apparatus for the cooking device provided by the embodiments of the present disclosure, the control module controls the at least one of the microwave module, the hot air module, the heating tube module, and the fan module according to the cooking parameter and the cooking stage. Therefore, the cooking time for the food material can be shortened. Meanwhile, the generation of harmful substances such as acrylamide is reduced.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a block diagram of a cooking device according to an embodiment of the present disclosure.
FIG. 2 is a schematic flowchart of a control method for a cooking device according to an embodiment of the present disclosure.
FIG. 3 is a schematic flowchart of a control method for a cooking device according to another embodiment of the present disclosure.
FIG. 4 is a schematic flowchart of a control method for a cooking device according to another embodiment of the present disclosure.
FIG. 5 is a schematic flowchart of a control method for a cooking device according to another embodiment of the present disclosure.
FIG. 6 is a schematic flowchart of a control method for a cooking device according to another embodiment of the present disclosure.
FIG. 7 is a schematic flowchart of a control method for a cooking device according to a specific embodiment of the present disclosure.
FIG. 8 is a schematic diagram of a curve of a temperature of a cooking stage changing over time according to a specific embodiment of the present disclosure.
FIG. 9 is a block diagram of a cooking device according to another embodiment of the present disclosure.
FIG. 10 is a block diagram of a control apparatus for a cooking device according to an embodiment of the present disclosure.

### DETAILED DESCRIPTION OF THE EMBODIMENTS

The embodiments of the present disclosure will be described in detail below, examples thereof are illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A control method for a cooking device, a computer-readable storage medium, a cooking device, and a control apparatus for a cooking device in the embodiments of the present disclosure are described below with reference to the accompanying drawings.

Before introducing the control method for the cooking device and the control apparatus for the cooking device of the embodiments of the present disclosure, a specific structure of the cooking device is correspondingly described.

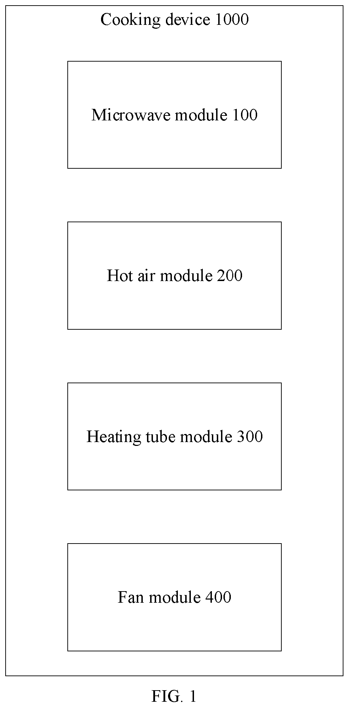

In an exemplary embodiment of the present disclosure, as illustrated in FIG. 1, a cooking device 1000 comprises a microwave module 100, a hot air module 200, a heating tube module 300, and a fan module 400.

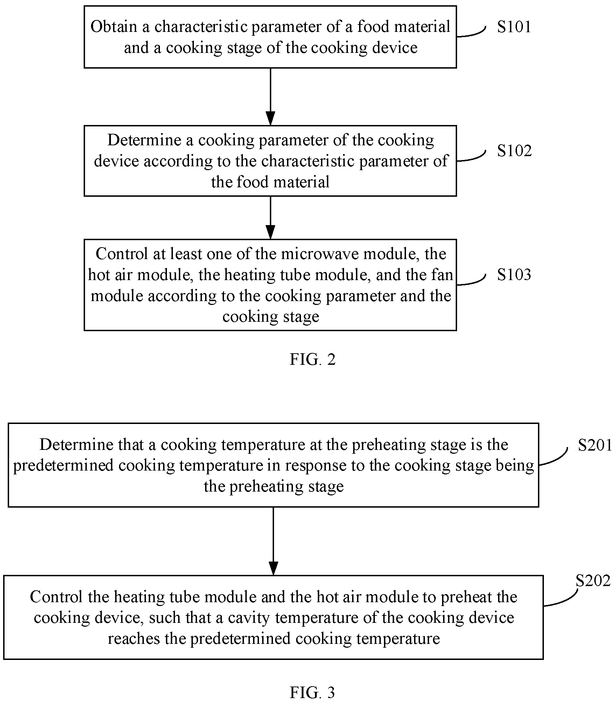

FIG. 2 is a schematic flowchart of a control method for a cooking device according to an embodiment of the present disclosure.

In some embodiments of the present disclosure, as illustrated in FIG. 2, the control method for the cooking device comprises the following operations at blocks.

At block S101, a characteristic parameter of a food material and a cooking stage of the cooking device are obtained.

In the embodiment, the characteristic parameter of the food material comprises a type and a weight of the food material. Therefore, the type and the weight of the food material may be obtained by providing an intelligent sensor or be manually obtained by a user. In addition, a manner of obtaining the characteristic parameter of the food material and the characteristic parameter of the food material may be not specifically defined in the present disclosure. The cooking stage comprises a preheating stage, a steady heating stage, a continuous heating stage, and a crusting and coloring stage. In the embodiment, a cooking stage of the cooking device for obtaining may be one of the preheating stage, the steady heating stage, the continuous heating stage, and the crusting and coloring stage.

At block S102, a cooking parameter of the cooking device is determined according to the characteristic parameter of the food material.

In the embodiment, the characteristic parameter of the food material comprises the type and the weight of the food material. The cooking parameter of the cooking device comprises a predetermined cooking temperature, cooking power, and total cooking time. The predetermined cooking temperature and the cooking power may be determined according to the type of the food material, and the total cooking time is determined according to the weight of the food material.

It should be noted that the predetermined cooking temperature may be preferably in a range of [150°C, 250°C]. The total cooking time may be preferably in a range of [12min, 35min]. In addition, the present disclosure may not specifically define the value range of the predetermined cooking temperature and the value range of the total cooking time.

At block S103, at least one of the microwave module, the hot air module, the heating tube module, and the fan module is controlled according to the cooking parameter and the cooking stage

In the embodiment, the at least one of the microwave module, the hot air module, the heating tube module, and the fan module is controlled according to the predetermined cooking temperature, the cooking power, and the total cooking time in the cooking parameter, and the preheating stage, the steady heating stage, the continuous heating stage, and the crusting and coloring stage in the cooking stage. When the cooking stage is the preheating stage, the heating tube module and the hot air module are controlled. When the cooking stage is the steady heating stage, the microwave module, the hot air module, and the fan module are controlled. When the cooking stage is the continuous heating stage, the heating tube module is controlled. When the cooking stage is the crusting and coloring stage, the heating tube module and the fan module are controlled.

Further, in some embodiments of the present disclosure, as illustrated in FIG. 3, the controlling at least one of the microwave module, the hot air module, the heating tube module, and the fan module according to the cooking parameter and the cooking stage comprises the following operations at blocks.

At block S201, a cooking temperature at the preheating stage is determined to be the predetermined cooking temperature in response to the cooking stage being the preheating stage.

In the embodiment, in response to the cooking stage being the preheating stage, it may be determined that the cooking temperature at the preheating stage is a predetermined cooking temperature T_0 according to the type of the food material, and the predetermined cooking temperature may be preferably in a range of [150°C, 250°C]. When the type of the food material is potato chips, the predetermined cooking temperature T_0 may be preferably 200°C. In addition, the present disclosure may not specifically define the predetermined cooking temperature T_0 when the type of the food material is the potato chips.

At block S202, the heating tube module and the hot air module are controlled to preheat the cooking device, such that a cavity temperature of the cooking device reaches the predetermined cooking temperature.

In the embodiment, a heating tube may be disposed at a top, a back, a bottom, and the like of the cooking device, and the fan may be preferably disposed at the back of the cooking device. Further, operation of the hot air module may be performed by integrally providing and operating the fan at the back of the cooking device and the heating tube at the back of the cooking device together. When the heating tube module operates, all the heating tubes operate together. Furthermore, the heating tube module and the hot air module are controlled to preheat the cooking device, such that the cavity temperature of the cooking device reaches the predetermined cooking temperature T_0. Moreover, the cavity temperature of the cooking device is obtained by providing a temperature sensor in the cooking device.

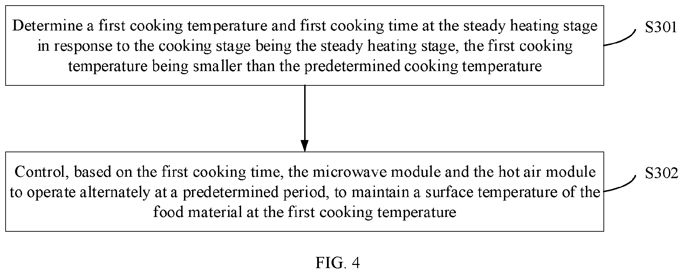

Further, in some embodiments of the present disclosure, as illustrated in FIG. 4, the controlling at least one of the microwave module, the hot air module, the heating tube module, and the fan module according to the cooking parameter and the cooking stage comprises the following operations at blocks.

At block S301, a first cooking temperature and first cooking time at the steady heating stage are determined in response to the cooking stage being the steady heating stage. The first cooking temperature is smaller than the predetermined cooking temperature.

In the embodiment, when the cooking stage is the steady heating stage, first cooking time t_1 may be preferably in a range of [40%t, 60%t], where t is the total cooking time. The first cooking time t_1 may be determined according to the total cooking time t. A first cooking temperature T_1 may be preferably in a range of [100°C, 120°C]. Moreover, the first cooking temperature T_1 is smaller than the predetermined cooking temperature T_0. A first cooking temperature T_1 at the steady heating stage may be selected by the user within the preferred value range. By limiting the first cooking temperature T_1 to range from 100°C to 120°C, it is possible to avoid the generation of harmful substances due to a high temperature in the food material while ensuring a cooking effect. For example, when the type of the food material is the potato chips, the weight of the food material is 454g, the predetermined cooking temperature T_0 may be preferably 200°C, and the total cooking time t may be preferably 20 min. Therefore, it may be determined that the first cooking time t_1 is in a range of [8min, 12min]. In the embodiment, the first cooking time t_1 may be preferably 10 min, and the first cooking temperature T_1 may be set by the user as 110°C.

At block S302, the microwave module and the hot air module are controlled based on the first cooking time to operate alternately at a predetermined period, to maintain a surface temperature of the food material at the first cooking temperature.

In the embodiment, cooking power of the microwave module is in a range of [800W, 1000W], cooking power of the hot air module is in a range of [1200W, 2200W]. Operation time of the microwave module is in a range of [30%T, 60%T], and operation time of the hot air module is [40%T, 70%T], where T is the predetermined period. When the predetermined period T is 60s, the operation time of the microwave module may be 36s, and the operation time of the hot air module is 24s. When the first cooking time t_1 is 10min, it can be seen that the number of times the microwave module and the hot air module alternately operate at the predetermined period T is 10, i.e., total operation time of the microwave module is 4min, and total operation time of the hot air module is 6min. Therefore, the microwave module and the hot air module are controlled to operate alternately at the predetermined period T based on the first cooking time t_1, to maintain the surface temperature of the food material at the first cooking temperature T_1.

Further, in some embodiments of the present disclosure, the control method for the cooking device further comprises: controlling the fan module to operate along with the microwave module while controlling, based on the first cooking time, the microwave module and the hot air module to operate alternately at the predetermined period.

In the embodiment, when the cooking stage is the steady heating stage, the microwave module and the hot air module are controlled to operate alternately at the predetermined period according to the first cooking time. The fan may be preferably disposed at the back of the cooking device. Further, the fan module is controlled to operate along with the microwave module. The operation of the fan module refers to the operation of the fan at the back of the cooking device. In this way, the rest of heat of the heating tube may be transferred into a cavity of the cooking device. Therefore, a falling speed of the cavity temperature of the cooking device is delayed.

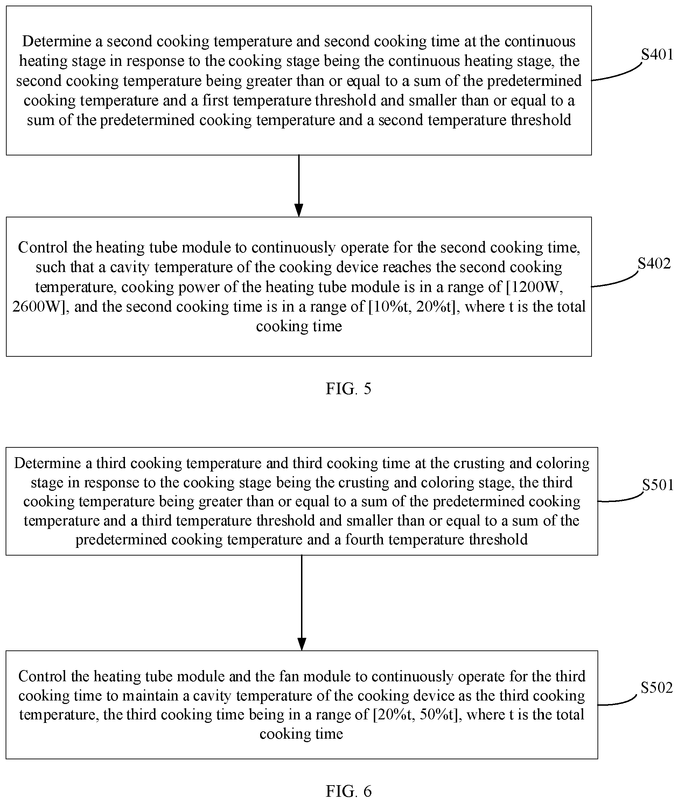

Further, in some embodiments of the present disclosure, as illustrated in FIG. 5, the controlling at least one of the microwave module, the hot air module, the heating tube module, and the fan module according to the cooking parameter and the cooking stage comprises the following operations at blocks.

At block S401, a second cooking temperature and second cooking time at the continuous heating stage are determined in response to the cooking stage being the continuous heating stage. The second cooking temperature is greater than or equal to a sum of the predetermined cooking temperature and a first temperature threshold and smaller than or equal to a sum of the predetermined cooking temperature and a second temperature threshold.

In the embodiment, when the cooking stage is the continuous heating stage, second cooking time t_2 is determined based on the total cooking time t. A second cooking temperature T_2 at the continuous heating stage may be set by the user. The second cooking temperature T_2 is greater than or equal to the sum of the predetermined cooking temperature T_0 and the first temperature threshold and smaller than or equal to the predetermined cooking temperature T_0 and the second temperature threshold. It should be noted that the first temperature threshold may be preferably 15°C, and the second temperature threshold may be preferably 30°C. In addition, the present disclosure may not specifically define the values of each of the first temperature threshold and the second temperature threshold.

At block S402, the heating tube module is controlled to continuously operate for the second cooking time, such that a cavity temperature of the cooking device reaches the second cooking temperature. Cooking power of the heating tube module is in a range of [1200W, 2600W], and the second cooking time is in a range of [10%t, 20%t], where t is the total cooking time.

In the embodiment, the cooking power of the heating tube module is in a range of [1200W, 2600W]. When the type of the food material is the potato chips, and when the weight of the food material is 454g, the predetermined cooking temperature T_0 may be preferably 200°C, and the total cooking time t may be preferably 20 min. Further, the second cooking time t_2 may be determined to be in a range of [2min, 4min]. Therefore, the cooking power of the heating tube module may be preferably 2000W, and the second cooking time t_2 in the embodiment may be preferably 3min. Since the second cooking temperature T_2 is in a range of [215°C, 230°C], the second cooking temperature T_2 may be set by the user to be preferably 230°C. In addition, the present disclosure may not specifically define the value of the cooking power of the heating tube module within its value range, and then control the heating tube module to continuously operate for the second cooking time t_2 based on the selected cooking power, such that the cavity temperature of the cooking device reaches the second cooking temperature T_2.

Further, in some embodiments of the present disclosure, as illustrated in FIG. 6, the controlling at least one of the microwave module, the hot air module, the heating tube module, and the fan module according to the cooking parameter and the cooking stage comprises the following operations at blocks.

At block S501, a third cooking temperature and third cooking time at the crusting and coloring stage are determined in response to the cooking stage being the crusting and coloring stage. The third cooking temperature being greater than or equal to a sum of the predetermined cooking temperature and a third temperature threshold and smaller than or equal to a sum of the predetermined cooking temperature and a fourth temperature threshold.

In the embodiment, when the cooking stage is the crusting and coloring stage, third cooking time t_3 is determined according to the total cooking time t. Moreover, a third cooking temperature T_3 at the crusting and coloring stage may be set by the user. The third cooking temperature T_3 is greater than or equal to the sum of the predetermined cooking temperature T_0 and the third temperature threshold and smaller than or equal to the sum of the predetermined cooking temperature T_0 and the fourth temperature threshold. It should be noted that the third temperature threshold may be preferably 10°C, and the fourth temperature threshold may be preferably 25°C. In addition, the present disclosure may not specifically define the values of the third temperature threshold and the fourth temperature threshold.

At block S502, the heating tube module and the fan module are controlled to continuously operate for the third cooking time to maintain a cavity temperature of the cooking device at the third cooking temperature. The third cooking time is in a range of [20%t, 50%t], where t is the total cooking time.

In the embodiment, when the type of the food material is the potato chips and the weight of the food material is 454g, the predetermined cooking temperature T_0 may be preferably 200°C, the total cooking time t may be preferably 20min, the cooking power of the heating tube module may be preferably 2000W, the heating power of the fan module may be preferably 20W, and the third cooking time t_3 may be limited to be in a range of [4min, 10min]. For example, the third cooking time t_3 in the embodiment may be preferably 7min. Since the third cooking temperature T_3 is in a range of [210°C, 225°C], the third cooking temperature T_3 may be set by the user to be preferably 220°C. In addition, the present disclosure may not specifically define the value of the cooking power of the heating tube module within the value range, and then control the heating tube module and the fan module to continuously operate for the third cooking time t_3 based on the selected cooking power, to maintain the cavity temperature of the cooking device at the third cooking temperature T_3, and accelerate hot air circulation in the cavity of the cooking device through the fan module, allowing a surface of food to be uniformly heated. Therefore, a good crusting and coloring effect is obtained.

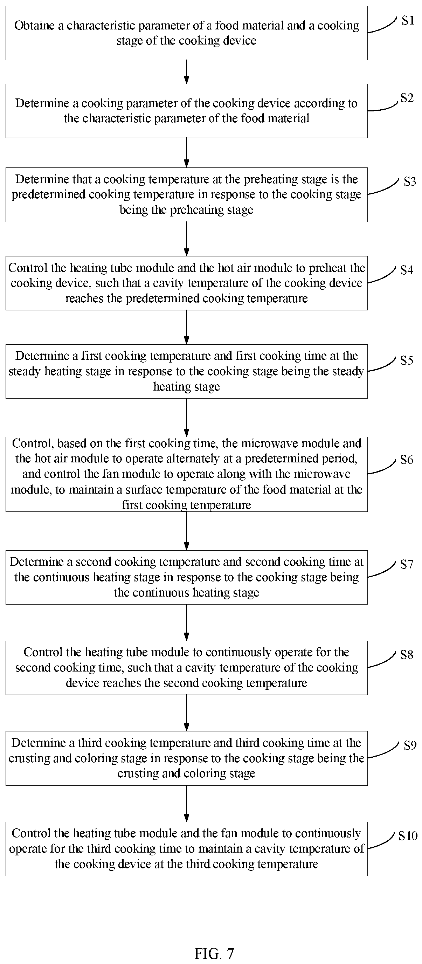

Specific process steps of the control method for the cooking device are described below with reference to FIG. 7 and the specific embodiments of the present disclosure. As illustrated in FIG. 7, the following steps at blocks are performed.

At block S1, a characteristic parameter of a food material and a cooking stage of the cooking device are obtained.

At block S2, a cooking parameter of the cooking device is determined according to the characteristic parameter of the food material.

At block S3, a cooking temperature at the preheating stage is determined to be the predetermined cooking temperature in response to the cooking stage being the preheating stage.

At block S4, the heating tube module and the hot air module are controlled to preheat the cooking device, such that a cavity temperature of the cooking device reaches the predetermined cooking temperature.

At block S5, a first cooking temperature and first cooking time at the steady heating stage are determined in response to the cooking stage being the steady heating stage.

At block S6, the microwave module and the hot air module are controlled based on the first cooking time to operate alternately at a predetermined period, and the fan module is further controlled to operate along with the microwave module, to maintain a surface temperature of the food material at the first cooking temperature.

At block S7, a second cooking temperature and second cooking time at the continuous heating stage are determined in response to the cooking stage being the continuous heating stage.

At block S8, the heating tube module is controlled to continuously operate for the second cooking time, such that a cavity temperature of the cooking device reaches the second cooking temperature.

At block S9, a third cooking temperature and third cooking time at the crusting and coloring stage are determined in response to the cooking stage being the crusting and coloring stage.

At block S10, the heating tube module and the fan module are controlled to continuously operate for the third cooking time to maintain a cavity temperature of the cooking device at the third cooking temperature.

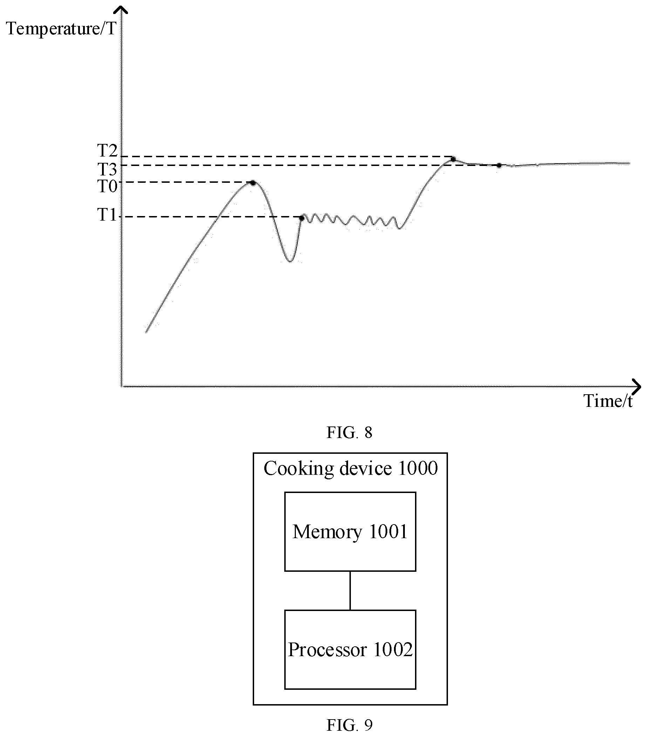

In summary, FIG. 8 illustrates a schematic diagram of a curve of a temperature of a cooking stage changing over time according to a specific embodiment of the present disclosure. In response to the type of the food material being the potato chips and the weight of the food material being 454g, the predetermined temperature T_0 may be preferably 200°C, and the total cooking time may be preferably 20 min. When the cooking stage is the preheating stage, the heating tube module and the hot air module are controlled to preheat the cooking device. At this time, the cavity temperature of the cooking device continuously increases until reaches the predetermined cooking temperature of 200°C. Then, a food material that need to be cooked is added.

When the cooking stage is the steady heating stage, the microwave module is controlled to operate at power of 800W, and the hot air module is controlled to operate at power of 1650W. When the predetermined period T is 60s, the operation time of the microwave module may be 36s, and the operation time of the hot air module is 24s. When the first cooking time t_1 preferably is 10min, it can be seen that the number of times the microwave module and the hot air module alternately operate at the predetermined period T is 10, i.e., the total operation time of the microwave module is 4min, and the total operation time of the hot air module is 6min. Then, the microwave module and the hot air module are controlled to operate alternately at the predetermined period T based on the first cooking time t_1, to maintain the surface temperature of the food material at the first cooking temperature T_1. At this time, the fan module is controlled to operate along with the microwave module. In this way, the rest of the heat of the heating tube may be transferred into the cavity of the cooking device. Therefore, the falling speed of the cavity temperature of the cooking device is delayed. The first cooking temperature T_1 at the steady heating stage may be selected by the user within the preferred value range. By limiting the first cooking temperature T_1 to range from 100°C to 120°C, it is possible to avoid the generation of harmful substances due to a high temperature in the food material while ensuring the cooking effect.

When the cooking stage is the continuous heating stage, the cooking power of the heating tube module is 2000W, the second cooking temperature T_2 is preferably 230°C, and the second cooking time t_2 may be preferably 3min. Further, the heating tube module is controlled to continuously operate for the second cooking time t_2. In this way, the cavity temperature of the cooking device is caused to reach the second cooking temperature T_2.

When the cooking stage is the crusting and coloring stage, the cooking power of the heating tube module is 2000W, and the cooking power of the fan module is 20W. Moreover, the third cooking temperature T_3 is preferably 220°C, and the third cooking time t_3 may be preferably 7 min. Further, the heating tube module and the fan module are controlled to continuously operate for the third cooking time t_3, to maintain the cavity temperature of the cooking device at the third cooking temperature T_3. Furthermore, the hot air circulation in the cavity of the cooking device is accelerated through the fan module, which makes the surface of the food uniformly heated. Therefore, a good crusting and coloring effect is obtained.

It should be noted that, in the above embodiments, in a case of having a same effect of cooking potato chips, total cooking time used by applying the method according to the embodiments of the present disclosure is 20min, and a content of acrylamide is 123µg/kg. However, total cooking time used by a cooking method for a traditional air fryer is 28min, and the content of acrylamide is 174µg/kg. Further, through the control method for the cooking device in the present disclosure, the cooking time for the food material can be shortened. Meanwhile, the generation of harmful substances such as acrylamide is reduced.

In conclusion, according to the control method for the cooking device provided by the embodiments of the present disclosure, the at least one of the microwave module, the hot air module, the heating tube module, and the fan module may be controlled according to the cooking parameter and the cooking stage. Therefore, the cooking time for the food material can be shortened. Meanwhile, the generation of harmful substances such as acrylamide is reduced.

Based on the control method for the cooking device according to the foregoing embodiments of the present disclosure, the embodiments of the present disclosure further provide a computer-readable storage medium, which has a control program for a cooking device stored thereon. The control program for the cooking device, when executed by a processor, implements the control method for the cooking device according to the above embodiments of the present disclosure.

In summary, with the computer-readable storage medium according to the above embodiments of the present disclosure, the processor executes the control program for the cooking device stored thereon. Therefore, the cooking time for the food material can be shortened. Meanwhile, the generation of harmful substances such as acrylamide is reduced.

FIG. 9 is a block diagram of a cooking device according to another embodiment of the present disclosure.

Further, as illustrated in FIG. 9, based on the foregoing control method for the cooking device according to the embodiments of the present disclosure, the embodiments of the present disclosure further provide a cooking device 1000, which comprises a memory 1001, a processor 1002, and a control program for a cooking device stored on the memory 1001 and executable on the processor 1002. The processor 1002, when executing the control program, implements the control method for the cooking device according to the embodiments of the present disclosure as described above.

In summary, with the cooking device according to the embodiments of the present disclosure, the processor executes the control program for the cooking device stored on the memory. Therefore, the cooking time for the food material can be shortened. Meanwhile, the generation of harmful substances such as acrylamide is reduced.

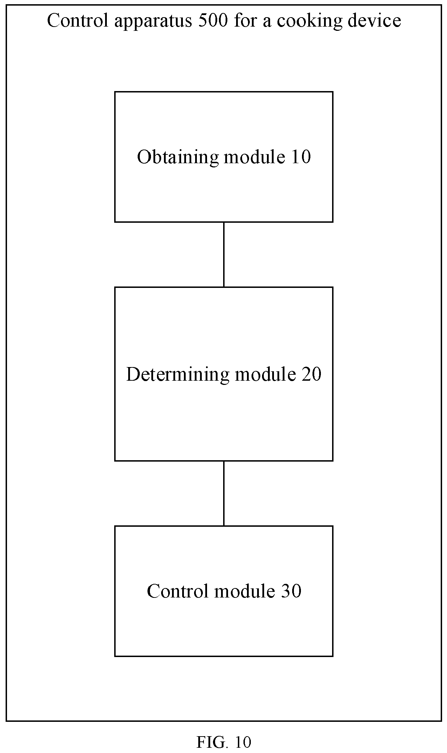

FIG. 10 is a block diagram of a control apparatus for a cooking device according to an embodiment of the present disclosure.

As illustrated in FIG. 10, the control apparatus 500 for the cooking device comprises an obtaining module 10, a determining module 20, and a control module 30.

Here, the obtaining module 10 is configured to obtain a characteristic parameter of a food material and a cooking stage of the cooking device. The determining module 20 is configured to determine a cooking parameter of the cooking device according to the characteristic parameter of the food material. The control module 30 is configured to control at least one of the microwave module, the hot air module, the heating tube module, and the fan module according to the cooking parameter and the cooking stage.

In some embodiments of the present disclosure, the characteristic parameter of the food material comprises a type and a weight of the food material, the cooking parameter comprises a predetermined cooking temperature, cooking power, and total cooking time, and the cooking stage comprises a preheating stage, a steady heating stage, a continuous heating stage, and a crusting and coloring stage.

In some embodiments of the present disclosure, the control module 30 is specifically configured to: determine that a cooking temperature at the preheating stage is the predetermined cooking temperature in response to the cooking stage being the preheating stage; and control the heating tube module and the hot air module to preheat the cooking device, such that a cavity temperature of the cooking device reaches the predetermined cooking temperature.

In some embodiments of the present disclosure, the control module 30 is specifically configured to: determine a first cooking temperature and first cooking time at the steady heating stage in response to the cooking stage being the steady heating stage, the first cooking temperature being smaller than the predetermined cooking temperature; and control, based on the first cooking time, the microwave module and the hot air module to operate alternately at a predetermined period, to maintain a surface temperature of the food material at the first cooking temperature.

In some embodiments of the present disclosure, the control module 30 is further configured to control the fan module to operate along with the microwave module while controlling, based on the first cooking time, the microwave module and the hot air module to operate alternately at the predetermined period.

In some embodiments of the present disclosure, cooking power of the microwave module is in a range of [800W, 1000W], cooking power of the hot air module is in a range of [1200W, 2200W], and the first cooking time is in a range of [40%t, 60%t], where t is the total cooking time.

In some embodiments of the present disclosure, the control module 30 is specifically configured to: determine a second cooking temperature and second cooking time at the continuous heating stage in response to the cooking stage being the continuous heating stage, the second cooking temperature being greater than or equal to a sum of the predetermined cooking temperature and a first temperature threshold and smaller than or equal to a sum of the predetermined cooking temperature and a second temperature threshold; and control the heating tube module to continuously operate for the second cooking time, such that a cavity temperature of the cooking device reaches the second cooking temperature. Cooking power of the heating tube module is in a range of [1200W, 2600W], and the second cooking time is in a range of [10%t, 20%t], where t is the total cooking time.

In some embodiments of the present disclosure, the control module 30 is specifically configured to: determine a third cooking temperature and third cooking time at the crusting and coloring stage in response to the cooking stage being the crusting and coloring stage, the third cooking temperature being greater than or equal to a sum of the predetermined cooking temperature and a third temperature threshold and smaller than or equal to a sum of the predetermined cooking temperature and a fourth temperature threshold; and control the heating tube module and the fan module to continuously operate for the third cooking time to maintain a cavity temperature of the cooking device at the third cooking temperature. The third cooking time is in a range of [20%t, 50%t], where t is the total cooking time.

In some embodiments of the present disclosure, the predetermined cooking temperature and the cooking power are each determined based on the type of the food material, and the predetermined cooking temperature is in a range of [150°C, 250°C]; and the total cooking time is determined based on the weight of the food material, and the total cooking time is in a range of [12min, 35min].

It should be noted that other specific implementations of the control apparatus for the cooking device provided according to the embodiments of the present disclosure may refer to the specific implementations of the control method for the cooking device according to the above embodiments of the present disclosure, and are omitted here for reducing redundancy.

In conclusion, according to the control apparatus for the cooking device provided by the embodiments of the present disclosure, the at least one of the microwave module, the hot air module, the heating tube module, and the fan module is controlled by the control module according to the cooking parameter and the cooking stage. Therefore, the cooking time for the food material can be shortened. Meanwhile, the generation of harmful substances such as acrylamide is reduced.

In addition, other compositions and functions of the cooking device according to the embodiments of the present disclosure are known to those skilled in the art, and are omitted here for reducing redundancy.

## Claims

1. A control method for a cooking device, the cooking device comprising a microwave module, a hot air module, a heating tube module, and a fan module, the method comprising:
obtaining a characteristic parameter of a food material and a cooking stage of the cooking device;
determining a cooking parameter of the cooking device according to the characteristic parameter of the food material; and
controlling at least one of the microwave module, the hot air module, the heating tube module, and the fan module according to the cooking parameter and the cooking stage.

2. The control method according to claim 1, wherein the characteristic parameter of the food material comprises a type and weight of the food material, the cooking parameter comprises a predetermined cooking temperature, cooking power, and total cooking time, and the cooking stage comprises a preheating stage, a steady heating stage, a continuous heating stage, and a crusting and coloring stage.

3. The control method according to claim 2, wherein said controlling at least one of the microwave module, the hot air module, the heating tube module, and the fan module according to the cooking parameter and the cooking stage comprises:
determining that a cooking temperature at the preheating stage is the predetermined cooking temperature in response to the cooking stage being the preheating stage; and
controlling the heating tube module and the hot air module to preheat the cooking device, such that a cavity temperature of the cooking device reaches the predetermined cooking temperature.

4. The control method according to claim 2, wherein said controlling at least one of the microwave module, the hot air module, the heating tube module, and the fan module according to the cooking parameter and the cooking stage comprises:
determining a first cooking temperature and first cooking time at the steady heating stage in response to the cooking stage being the steady heating stage, the first cooking temperature being smaller than the predetermined cooking temperature; and
controlling, based on the first cooking time, the microwave module and the hot air module to operate alternately at a predetermined period, to maintain a surface temperature of the food material at the first cooking temperature.

5. The control method according to claim 4, further comprising:
controlling the fan module to operate along with the microwave module while controlling, based on the first cooking time, the microwave module and the hot air module to operate alternately at the predetermined period.

6. The control method according to claim 5, wherein cooking power of the microwave module is in a range of [800W, 1000W], cooking power of the hot air module is in a range of [1200W, 2200W], and the first cooking time is in a range of [40%t, 60%t], where t is the total cooking time.

7. The control method according to claim 2, wherein said controlling at least one of the microwave module, the hot air module, the heating tube module, and the fan module according to the cooking parameter and the cooking stage comprises:
determining a second cooking temperature and second cooking time at the continuous heating stage in response to the cooking stage being the continuous heating stage, the second cooking temperature being greater than or equal to a sum of the predetermined cooking temperature and a first temperature threshold and smaller than or equal to a sum of the predetermined cooking temperature and a second temperature threshold; and
controlling the heating tube module to continuously operate for the second cooking time, such that a cavity temperature of the cooking device reaches the second cooking temperature, cooking power of the heating tube module being in a range of [1200W, 2600W], and the second cooking time being in a range of [10%t, 20%t], where t is the total cooking time.

8. The control method according to claim 2, wherein said controlling at least one of the microwave module, the hot air module, the heating tube module, and the fan module according to the cooking parameter and the cooking stage comprises:
determining a third cooking temperature and third cooking time at the crusting and coloring stage in response to the cooking stage being the crusting and coloring stage, the third cooking temperature being greater than or equal to a sum of the predetermined cooking temperature and a third temperature threshold and smaller than or equal to a sum of the predetermined cooking temperature and a fourth temperature threshold; and
controlling the heating tube module and the fan module to continuously operate for the third cooking time to maintain a cavity temperature of the cooking device at the third cooking temperature, the third cooking time being in a range of [20%t, 50%t], where t is the total cooking time.

9. The control method according to any one of claims 2 to 8, wherein:
the predetermined cooking temperature and the cooking power are each determined based on the type of the food material, and the predetermined cooking temperature is in a range of [150°C, 250°C]; and
the total cooking time is determined based on the weight of the food material, and the total cooking time is in a range of [12min, 35min].

10. A computer-readable storage medium, having a control program for a cooking device stored thereon, wherein the control program for the cooking device, when executed by a processor, implements a control method for the cooking device according to any one of claims 1 to 9.

11. A cooking device, comprising:
a memory;
a processor; and
a control program for the cooking device stored on the memory and executable on the processor, wherein the processor, when executing the control program, implements a control method for the cooking device according to any one of claims 1 to 9.

12. A control apparatus for a cooking device, the cooking device comprising a microwave module, a hot air module, a heating tube module, and a fan module, the apparatus comprising:
an obtaining module configured to obtain a characteristic parameter of a food material and a cooking stage of the cooking device;
a determining module configured to determine a cooking parameter of the cooking device according to the characteristic parameter of the food material; and
a control module configured to control at least one of the microwave module, the hot air module, the heating tube module, and the fan module according to the cooking parameter and the cooking stage.
